# EUROPEAN PATENT SPECIFICATION

(11) **EP 4 466 947 B1**
(45) Date of publication and mention of the grant of the patent: **06.05.2026**
(21) Application number: 23700223.3
(22) Date of filing: 12.01.2023
(51) Int. Cl.: H05B 45/20, H05B 47/105, H05B 47/11, H05B 47/115, H05B 47/12, H05B 47/125

(54) **MODIFICATION OF IMAGES FOR PALETTE EXTRACTION BASED ON CONTEXT**
MODIFIKATION VON BILDERN ZUR KONTEXTBASIERTEN PALETTENEXTRAKTION
MODIFICATION D'IMAGES POUR L'EXTRACTION DE PALETTE BASÉE SUR LE CONTEXTE

(30) Priority: 18.01.2022 EP 22151931
(43) Date of publication of application: 27.11.2024
(73) Proprietor: Signify Holding B.V., 5656 AE Eindhoven (NL)
(72) Inventor: SQUILLACE, Jorge,Gabriel, 5656 AE Eindhoven (NL); SINHA, Shubhendu, Subodh, 5656 AE Eindhoven (NL); MEERBEEK, Berent, Willem, 5656 AE Eindhoven (NL)
(74) Representative: Verweij, Petronella Daniëlle
(86) International application number: PCT/EP2023/050600
(87) International publication number: WO 2023/138970

(56) References cited:
- EP-A1- 3 904 845
- CN-A- 111 881 857
- US-A1- 2019 261 484
- US-A1- 2020 374 998
- US-B1- 9 501 718

## Description

### FIELD OF THE INVENTION

The present invention generally relates to controlling light sources based on modification of an image.

### BACKGROUND OF THE INVENTION

Home and professional environments contain a large number of lighting devices for creation of ambient, atmosphere, accent or task lighting. These controllable lighting devices may be controlled via user interface of a control device, for example a smartphone, via a (wireless) network. An example of such a user interface is disclosed in patent application WO 2013121311 Al, which discloses a remote control unit that comprises a user interface through which a user may identify an area in an image and a light source. The identified image area is linked with the light source and color information of the identified image area is transmitted to the light source. The light setting of the light source is thereby controlled based on the color information. A user is thereby enabled to pick the color to be outputted by a light source by selecting an area in an image displayed on the remote control unit. US2020374998A1 discloses controlling a plurality of light sources based on a source image.

### SUMMARY OF THE INVENTION

The inventors have realized that when controlling a light source based on an image, the image may not be suitable for the environment that the light source is installed in. It is therefore an object of the present invention to provide a system and a method that provide an image that is representative for the environment that the light source(s) are installed in.

According to a first aspect of the present invention, the object is achieved by a method for controlling a plurality of light sources based on a source image having the features in the independent claim. Preferred embodiments are defined in the dependent claims.

Hence, according to a first aspect of the present invention, there is provided a method of controlling a plurality of light sources based on a source image, wherein the plurality of light sources may be installed in an environment. The method comprises: obtaining contextual information of the environment, modifying the source image based on the contextual information into a modified source image, extracting a set of colors present in the modified source image, and controlling the plurality of light sources based on the set of colors of the modified source image.

Thus, the present invention is based on the idea of providing a way to use contextual information to modify a picture differently such that the resulting palette may be affected every time a scene is recalled. The difference in palette may in principle be hidden to the user or made explicit by showing the corresponding image that is the current scene under e.g. a modified filter.

The plurality of light sources may e.g. be LED light bulbs that are configured to emit light with different colors based on a control signal of a control device, such as a smartphone or remote. Alternatively, the plurality of light sources may e.g. be light bulbs that configured to emit light with different hue, color temperature, brightness, or intensity based on a control signal of a control device.

The environment may e.g. be a room or zone where the light sources are installed, such as a kid's room or a hall. Metadata regarding the environment, such as the type of room, may be obtained directly from sensors monitoring the environment such as an image capturing device, temperature sensor, light sensor, acoustic sensor or motion sensor, or by manual input from a user.

Modifying the source image based on the contextual image may comprise determining that e.g. a certain type of environment or a predetermined amount of motion in an environment may be modified in a specific way. For example, a kid's room may be more saturated than other similar rooms. In principle, the source image is not completely replaced and the intended color scheme or ambience that a user may have previously selected for a specific environment is not changed, but rather the specific implementation of the source image is modified to better suit the environment.

Controlling the light sources may comprise controlling first light source of the plurality of light sources based on a first color of the modified source image. The modified source image may, for example, contain a plurality of colors. The first color, e.g. green, may be automatically extracted from the modified source image. Alternatively, a user may select an area in the modified source image to pick the first color, e.g. green, from the image. Subsequently, the first light source may be controlled such that it emits light (e.g. green light) based on the first color. Similarly, a second light source of the plurality of light sources may be controlled based on a second color of the modified source image.

The present invention may thereby be advantageous in that the environmental light of the environment is based on, e.g., what kind of room a user is situated in and what kind of activity the user partakes in.

According to an embodiment of the present invention, obtaining contextual information of the environment comprises detecting contextual information from an image of the environment.

Obtaining contextual information may thereby comprise determining a type of the environment, and/or determining a set of colors or objects present in the environment. This may comprise image processing such as object detection or instance segmentation performed on an image of the environment.

By e.g. knowing what colors are present in the environment, a complementary color filter may be used to better reproduce an intended scene or mood in the environment itself.

According to an embodiment of the present invention, obtaining contextual information of the environment comprises detecting contextual information from audio and/or motion captured in the environment.

Obtaining contextual information may thereby comprise detecting motion in the environment, capturing audio from the environment, and/or detecting a presence one or more specific users in the environment. This may comprise using sensors and/or connection data of devices (that may be associated with specific users) such as smartphones, to detect motion, presence and to capture audio.

According to an embodiment of the present invention, obtaining contextual information of the environment comprises detecting contextual information from ambient light and/or ambient temperature sensed in the environment.

The ambient light may be sensed by a light sensor present in or near the environment and the ambient temperature may be sensed by a temperature sensor present in or near the environment.

This may enable modifying the source image to comprise e.g. increasing brightness or saturation of the source image if the sensed light level is relatively high (e.g. above a predetermined threshold) and increasing a computed tomography of the source image if the sensed temperature is relatively high (e.g. above a predetermined threshold).

According to an embodiment of the present invention, the method further comprises rendering the modified source image on a display.

By rendering the modified source image on a display, the user is informed of (automatic) modifications being made and may thereby have a better understanding and control of the method.

According to an embodiment of the present invention, controlling the plurality of light sources comprises controlling a first light source based on a first color of the set of colors and controlling a second light source based on a second color of the set of colors.

A third light source may be controlled based on a third color of the set of colors and so on, whereby a number of colors of the set of colors may correspond to the number of light sources of the plurality of light sources.

Thus, a plurality of light sources may be used to reproduce a color scheme of the modified source image in the environment, to e.g. translate a mood or ambience of the modified source image to the environment.

According to an embodiment of the present invention, the method further comprises sorting the set of colors according to a predefined color scale, and wherein controlling the plurality of light sources comprises first controlling the plurality of light sources based on the first color of the sorted set of colors and subsequently controlling the plurality of light sources based on the second color of the sorted set of colors.

Thereby, a change in control of the plurality of light sources may be sorted according to a predefined color scale, while still maintaining to controlling being based on the set of colors of the modified source image. This mitigates a change in control being jarring and enables smooth transitions e.g. between colors of the set of colors.

According to an embodiment of the present invention, modifying the source image comprises determining a type of the environment based on the contextual information and modifying the source image based on the determined type of the environment into the modified source image.

By modifying the source image based on a determined type of the environment, the control of the plurality of light sources is adapted to the type of the environment. This may enable e.g. desaturation for halls and bedrooms where bright colors may be unwanted.

Determining a type of the environment based on the contextual information may comprise image processing of an image of the environment, analysis of motion detected in the environment, and/or analysis of audio captured in the environment.

According to an embodiment of the present invention, the contextual information is motion in the environment.

Such contextual information may be used to modify the source image based on motion in the environment. For example, colors in environments with a lot (e.g. relative to a predetermined amount or a historic amount) of motion may beneficially be desaturated.

According to an embodiment of the present invention, the contextual information is a set of colors present in the environment.

Such contextual information may be used to modify the source image based on a set of colors present in the environment. For example, if the environment comprises a lot of green furniture or wallpaper, or the walls are painted green, the modified source image may beneficially have less green. This enables the control of the plurality of light sources to better reproduce the mood or ambience of the source image in the specific environment, already comprising green elements.

According to an embodiment of the present invention, the contextual information is which user(s) are present in the environment.

Such contextual information may be used to modify the source image based on which user(s) are present in the environment. For example, if a child is present in an environment it may be beneficial to modify the source image to be more saturated. This enables the control of the plurality of light sources to better stimulate a child's developing optical system.

According to an embodiment of the present invention, modifying the source image into a modified source image is also based on a time of day.

This enables changing saturation of the modified source image based on the time of day, such that e.g. desaturated colors are used late at night.

The time of day may have a higher or lower priority compared to certain types of contextual information being used to also modify the source image. For example, a kid's room may always be saturated while an adult's bedroom is adapted to a greater degree based on time of day.

According to an embodiment of the present invention, modifying the source image into a modified source image comprises applying one or more filters to the source image.

Such a filter may e.g. change a saturation level, brightness, hue or colors present in the modified source image. The filter may e.g. apply a sepia tone or grayscale to the source image.

If, for instance, the light intensity of the source image is modified, the brightness of the set of colors in the source image may be modified as a function thereof. If, for instance, the hue of the source image is changed, the hue of the set of colors in the source image may be modified as a function thereof. If, for instance, the saturation of source image is changed, the saturation of the set of colors in the source image may be modified as a function thereof.

If, for instance, the light intensity of the source image is changed, a brightness filter may be applied to (at least a part of) the source image as a function of the light intensity. If, for instance, the hue of the source image is changed, a color filter may be applied to (at least a part of) the source image as a function of the hue. If, for instance, the saturation of the source image is changed, a black and white filter may be applied to (at least a part of) the source image as a function of the saturation.

Applying a filter may further comprise selecting pixels in the source image that have a pixel color similar to a first color of the set of colors, and modifying pixel colors of the selected pixels based on a color detected in the environment. This enables changing only the color of pixels that have the same or a similar color of the color detected in the environment (e.g. the same hue).

According to an embodiment of the present invention the method further comprises: storing the extracted set of colors in a memory, and recalling the stored set of colors.

The memory may thereby be used to store an already extracted set of colors to save time and processing power, or to maintain a consistent set of colors over time.

According to a second aspect of the present invention, there is provided lighting control system for controlling a plurality of light sources based on a source image, wherein the plurality of light sources are installed in an environment, the lighting control system may comprise: a processor configured to obtain contextual information of the environment, to modify the source image based on contextual information into a modified source image, and to extract a set of colors present in the modified source image, wherein the processor is further configured to control the plurality of light sources based on the set of colors present in the modified source image.

The second aspect may in general have the same alternatives and advantages as the first aspect, mutatis mutandis.

According to a third aspect of the present invention, there is provided a computer program product for the lighting control system of the second aspect, the computer program product comprising computer program code to perform the method of the first aspect when the computer program product is run on the processor of the lighting control system.

The third aspect may in general have the same alternatives and advantages as the first and second aspect, mutatis mutandis.

Further objectives of, features of, and advantages with, the present invention will become apparent when studying the following detailed disclosure, the drawings and the appended claims. Those skilled in the art will realize that different features of the present invention can be combined to create embodiments other than those described in the following.

### BRIEF DESCRIPTION OF THE DRAWINGS

This and other aspects of the present invention will now be described in more detail, with reference to the appended drawings showing embodiment(s) of the invention.
Fig. 1 schematically shows results of a method according to an exemplifying embodiment of the present invention,
Fig. 2 shows a flowchart showing steps of a method according to an exemplifying embodiment of the present invention, and
Fig. 3 schematically shows a lighting control system according to an exemplifying embodiment of the present invention.

### DETAILED DESCRIPTION

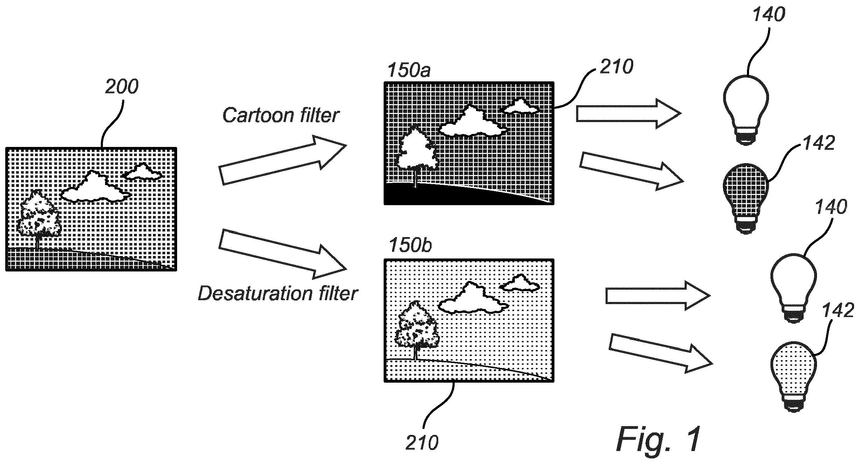

Fig. 1 schematically shows results of a method for controlling a plurality of light sources 140, 142. The method of Fig. 1 starts with a source image 200, which may be selected from a number of source images 200 e.g. from a library of source images 200. The source image 200 may ensure that the plurality of light sources 140, 142 are controlled based on a harmonious set of colors, because they are extracted from a (potentially curated) source image 200 with harmonious colors.

The source image 200 may be selected automatically or by a user, e.g. using a graphical user interface on a lighting control system.

The lighting control system may, for instance, comprise a smartphone, a computer, a light switch, a smart home hub, a smart speaker, or any other device configured to control light sources 140, 142.

The lighting control system may communicate with the light sources 140, 142 directly or indirectly, for instance via a router or bridge. Various wired and wireless communication protocols may be used, for example Ethernet, DMX, DALI, USB, Bluetooth, Wi-Fi, Li-Fi, 3G, 4G or ZigBee. A separate communication unit may be further comprised in the lighting control system and be configured to communicate lighting control commands from the lighting control system to the light sources 140, 142.

The light sources 140, 142 may be LED light bulbs, light strips or other light sources that are configured to emit light with different colors, hues, color temperature, brightness, and/or intensity based on a control signal of the lighting control system. For example, the light sources 140, 142 may be HUE^{®} light sources.

The method shown in Fig. 1 then modifies the source image 200 based on the environment 150a, 150b where the plurality of light sources 140, 142 are installed. The source image 200 is modified by applying different filters depending on the respective environment 150a, 150b into different modified source images 210.

The environments 150a, 150b may e.g. be different rooms or zones. In the example of Fig. 1, the topmost environment 150a is a kid's room and the bottommost environment 150b is a hallway.

Based on obtained contextual information of the environments 150a, 150b, in this case the type of room, a specific filter is applied to the source image 200 to become a modified source image 210.

A cartoon filter is applied to the source image 200 based on the environment 150a being a kid's room and a desaturation filter is applied to the source image 200 based on the environment 150a being a hallway.

Based on the modified source image 210, a set of colors present in the modified source image 210 is extracted and the plurality of light sources 140, 142 are controlled based on this set of colors.

Thereby, the light sources 140, 142 will emit light differently (e.g. with a different color, hue, color temperature, brightness, or intensity) in the different environments 150a, 150b only based on the difference in contextual information of the environments 150a, 150b. However, the emitted light will still be based on the same source image 200.

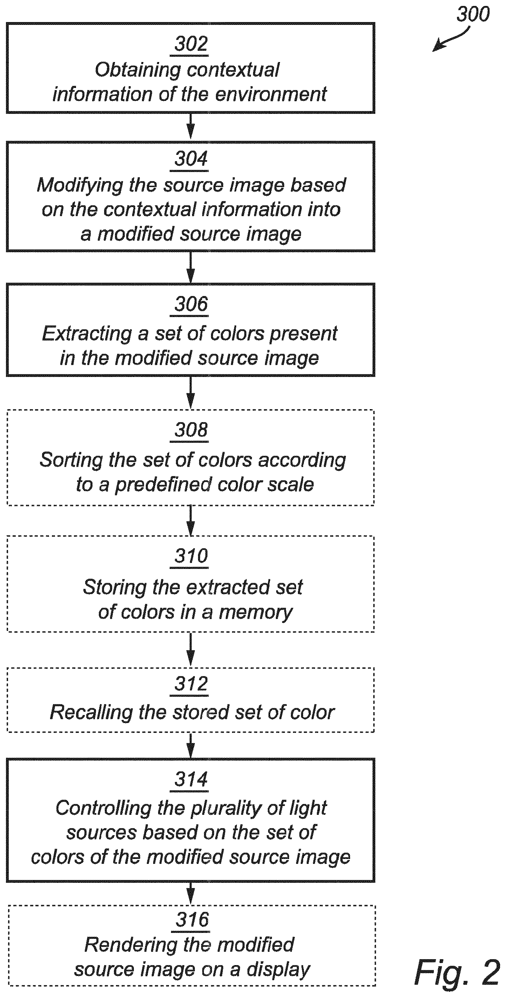

Fig. 2 shows a flowchart showing steps of a method 300 for controlling a plurality of light sources based on a source image, wherein the plurality of light sources are installed in an environment.

The method 300 may be implemented by a cloud server and/or a lighting control system as previously described.

The steps of the method 300 may be performed in the order shown in Fig. 2 or in any order. Steps of the method 300 that are shown in boxes with dashed lines are optional.

The first step shown comprises obtaining 302 contextual information of the environment.

This may comprise detecting contextual information from an image of the environment, from audio and/or motion captured, and/or from light and/or temperature in the environment.

The method 300 may detect motion using motion sensors or by measuring signal strengths of personal devices such as smartphones to different lights sources or Wi-Fi access points.

The method 300 may have access to an image taken of the environment or may require an image to be taken of the environment by a user. The step of obtaining 302 contextual information may further comprise detecting objects and/or colors present in the image using an image processing algorithm.

The method 300 may capture audio by using microphones such as ones comprised in smartphones of users.

The method 300 may further have access to user data associated with personal devices such as smartphones, such that obtaining contextual information of the environment may further comprise detecting a presence of a specific user in the environment.

The method 300 may furthermore sense temperature by using a temperature sensor present in or near the environment. The temperature sensed may be from an (adjacent or not) environment (i.e. room or zone) of the same building or living/work space. The temperature sensed may further be from the nearest weather station or city/town, and thereby be collected via a network from a server on the internet.

The method 300 may additionally sense ambient light levels of the environment by using light sensor present in or near the environment. The light levels may be measured at a distance from the environment, as long as the light levels are visible at such a range (e.g. through a window). These ambient light levels may be compared to an image taken of the environment and may be used to modify such an image taken of the environment to better match the most recently sensed ambient light level.

Based on any or all of the exemplified information available when performing the method 300, a type of room of the environment may be determined. For example, if a user identified as a child is often present in a specific environment, that environment may be identified as a kid's room. As another example, if a lot of motion is detected in a specific environment, that environment may be identified as a hallway. If a couch is detected in an image of the environment and users are often detected as being stationary in the environment, that environment may be identified as a living room. If a user sets a name of an environment to "kitchen," that environment may be identified as a kitchen.

A next step of the method 300 shown in Fig. 2 comprises modifying 304 the source image based on the contextual information into a modified source image.

Modifying 304 the source image may comprise applying one or more filters to the source image.

Such a filter may e.g. change a saturation level, brightness, hue or colors present in the modified source image. The filter may e.g. apply a sepia tone or grayscale to the source image.

A filter may be selected based on the contextual information. For example, a cartoon filter increasing the saturation of the source image may be selected for contextual information indicating that the environment is a kid's room.

Modifying 304 the source image may further be based on a time of day. For example, a brightness of the modified source image may be lower than the source image when the time of day is late at night or early morning.

The different options for modifications 304 may come into conflict. For example, as the time of day may indicate a specific filter being used and two different sources of contextual information (such as a dominant color of the environment and motion present in the environment) may indicate different specific filters. If these modifications 304 may be combined, the modifying 304 the source image may comprise combining these, e.g. using a (weighted) combination of different filters. Further, some combinations may cancel each other out, resulting in a predetermined priority of one over the other or a calculated portion of a filter being applied based on an algorithm determining relative strength of each indication of filter to be used.

In the above example, this may comprise applying 40% of a desaturation filter because the motion detected in the environment indicating desaturation is partially cancelled out the time of day indicating saturation. The example modifying 304 may further comprise applying a color filter that removes some of the dominant color from the 40% desaturated modified source image, thereby combining both filters.

Once the source image is modified 304, the method 300 comprises extracting 306 a set of colors present in the modified source image. This may comprise applying an algorithm for analyzing the color content of the modified source image and extracting 306 a number of colors from the modified source image. The number of colors extracted 306 may correspond to the number of light sources of the environment being controlled.

In order to extract 306 a suitable number of colors, white and black colors may be ignored and/or the most prevalent colors or averages of the most prevalent ranges of colors are extracted 306.

In order to extract 306 a suitable range of colors, colors present in the modified source image may be sorted according to a predefined color scale (such as according to wavelength) and extracting 306 may only extract colors with a predefined distance to already extracted colors. Alternatively, the set of colors extracted 306 may comprise colors or groups of colors that are evenly spread along the predefined scale. Extracting 306 may further group similar colors according to the predefined scale.

The extracted 306 set of colors may be sorted 308 according to a predefined color scale (such as according to wavelength). Accordingly, controlling 314 the plurality of light sources may make use of the sorted colors. Controlling 314 may comprise first controlling the plurality of light sources based on the first color of the sorted set of colors and subsequently controlling the plurality of light sources based on the second color of the sorted set of colors.

For example, the plurality of light sources may thereby be controlled 314 to scroll through the sorted set of colors over time while maintaining a pleasing and heuristic order of the changing colors.

The extracted 306 set of colors, which may be sorted 308 or not, may be stored 310 in a memory. The memory may for instance store a look-up table and may be a nonvolatile memory such as a hard disk drive, a solid-state drive, or a flash memory.

The method 300 may thereby recall 312 the stored 310 set of color before controlling 314 the plurality of light sources.

The modified source image may also be stored 310 in the memory and subsequently recalled 312.

This may allow a user to provide a user input (e.g. via a user interface) to select a stored 310 modified source image or set of colors from the memory to control the plurality of light sources according to either the set of colors associated with the selected stored modified image or the recalled 312 set of colors. The input selecting the stored 310 object(s) may be a signal received from a lighting control system. The input may be generated automatically, e.g. by a software application running on the lighting control system.

In a similar manner, modifying 304 the source image into a modified source image may comprise accessing the memory, the memory storing associations between contextual information and filters, and select the one or more filters that correspond to the obtained contextual information. These filters are then applied to achieve the previously created modified source image.

The method 300 comprises controlling 314 the plurality of light sources based on the set of colors of the modified source image. This may comprise controlling a first light source based on a first color of the set of colors and controlling a second light source based on a second color of the set of colors.

Controlling 314 a light source may comprise adjusting a color, brightness, or intensity of the light source. This may comprise sending control signal(s) from a lighting control system to the light source, e.g. wirelessly over Wi-Fi or Bluetooth^{®}.

A color of the set of colors being used to control 314 a light source may comprise controlling the light source to emit that color or converting the color to a brightness or temperature and controlling 314 the light source to emit with that brightness or temperature.

The method 300 may comprise rendering 316 the modified source image on a display, which may e.g. be part of the lighting control system.

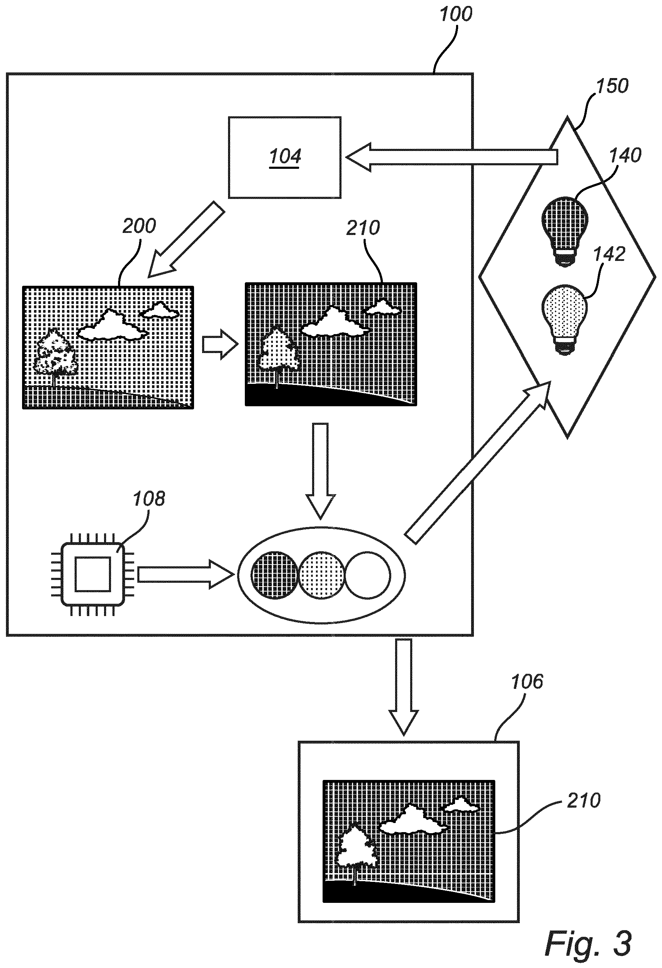

Fig. 3 shows a lighting control system 100 for controlling a plurality of light sources 140, 142 based on a source image 200, wherein the plurality of light sources 140, 142 are installed in an environment 150.

The lighting control system 100 comprises a processor 104 configured to obtain contextual information of the environment 150 as described in relation to Figs. 1-2.

The processor 104 is further configured to modify the source image 200 based on contextual information into a modified source image 210, and to extract a set of colors present in the modified source image 210.

Fig. 3 shows that the modified source image 210 is still the same image as the source image 200, but the colors have been slightly modified based on the contextual information. The set of colors correspond to colors present in the modified source image 210, which may be different from the colors present in the source image 200.

The set of colors may as shown not comprise all colors in the modified source image 210, in Fig. 3 the black of the modified source image 210 has not been extracted to the set of colors.

The set of colors may additionally or alternatively be recalled from a memory 108.

The processor 104 is further configured to control the plurality of light sources 140, 142 based on the set of colors, either those present in the modified source image 210 or those recalled from a memory 108.

Accordingly, the color of the first light source 140 is set to one of the colors (in this case the first color) of the set of colors and the color of the second light source 142 is set to another one of the colors (in this case the second color) of the set of colors.

The processor 104 may further be configured to display the modified source image 210 on a display 106, which may or may not form part of the lighting control system 100. The display 106 may e.g. be a screen of a smartphone that also acts as the lighting control system 100.

The person skilled in the art realizes that the present invention by no means is limited to the preferred embodiments described above. On the contrary, many modifications and variations are possible within the scope of the appended claims.

## Claims

1. A method (300) of controlling a plurality of light sources (140, 142) based on a source image (200), wherein the plurality of light sources (140, 142) are installed in an environment (150), the method (300) comprising:
obtaining (302) contextual information of the environment (150),
modifying (304) the source image (200) based on the contextual information into a modified source image (210), **characterised in**
extracting (306) a set of colors present in the modified source image (210), and
controlling (314) the plurality of light sources (140, 142) based on the set of colors of the modified source image (210).

2. The method (300) of claim 1, wherein obtaining (302) contextual information of the environment (150) comprises detecting contextual information from an image of the environment (150).

3. The method (300) of claim 1 or 2, wherein obtaining (302) contextual information of the environment (150) comprises detecting contextual information from audio and/or motion captured in the environment (150).

4. The method (300) of any one of the preceding claims, wherein obtaining (302) contextual information of the environment (150) comprises detecting contextual information from ambient light and/or ambient temperature sensed in the environment (150).

5. The method (300) of any one of the preceding claims, further comprising rendering (316) the modified source image (210) on a display (106).

6. The method (300) of any one of the preceding claims, wherein controlling (314) the plurality of light sources (140, 142) comprises controlling a first light source (140) based on a first color of the set of colors and controlling a second light source (142) based on a second color of the set of colors.

7. The method (300) of claim 6, further comprising sorting (308) the set of colors according to a predefined color scale, and wherein controlling (314) the plurality of light sources (140, 142) comprises first controlling the plurality of light sources (140, 142) based on the first color of the sorted set of colors and subsequently controlling the plurality of light sources (140, 142) based on the second color of the sorted set of colors.

8. The method (300) of any one of the preceding claims, wherein obtaining (302) contextual information of the environment (150) comprises determining a type of the environment (150) based on the contextual information and modifying (304) the source image (200) is based on the determined type of the environment (150) into the modified source image (210).

9. The method (300) of any one of the preceding claims, wherein the contextual information is a set of colors present in the environment (150).

10. The method (300) of any one of the preceding claims, wherein modifying (304) the source image (200) into a modified source image (210) is also based on a time of day.

11. The method (300) of any one of the preceding claims, wherein modifying (304) the source image (200) into a modified source image (210) comprises applying one or more filters to the source image (200).

12. The method (300) of any one of the preceding claims, further comprising:
storing (310) the extracted (306) set of colors in a memory (108), and
recalling (312) the stored (310) set of colors.

13. A lighting control system (100) for controlling a plurality of light sources (140, 142) based on a source image (200), wherein the plurality of light sources (140, 142) are installed in an environment (150), the lighting control system (100) comprising:
a processor (104) configured to obtain contextual information of the environment (150), to modify the source image (200) based on contextual information into a modified source image (210), and **characterised in that** the processor is configured to extract a set of colors present in the modified source image (210),
wherein the processor (104) is further configured to control the plurality of light sources (140, 142) based on the set of colors present in the modified source image (210).

14. A computer program product for the lighting control system (100) of claim 13, the computer program product comprising computer program code to perform the method (300) of any one of claims 1 to 12 when the computer program product is run on the processor (104) of the lighting control system (100).

## Patentansprüche

1. Verfahren (300) zum Steuern einer Vielzahl von Lichtquellen (140, 142) basierend auf einem Quellbild (200), wobei die Vielzahl von Lichtquellen (140, 142) in einem Umfeld (150) installiert sind, das Verfahren (300) umfassend:
Erhalten (302) von Kontextinformationen des Umfelds (150),
Ändern (304) des Quellbilds (200) basierend auf den Kontextinformationen in ein geändertes Quellbild (210), **gekennzeichnet durch**
Extrahieren (306) eines Satzes von Farben, die in dem geänderten Quellbild (210) vorhanden sind, und
Steuern (314) der Vielzahl von Lichtquellen (140, 142) basierend auf dem Satz von Farben des geänderten Quellbilds (210).

2. Verfahren (300) nach Anspruch 1, wobei das Erhalten (302) von Kontextinformationen des Umfelds (150) ein Erkennen von Kontextinformationen aus einem Bild des Umfelds (150) umfasst.

3. Verfahren (300) nach Anspruch 1 oder 2, wobei das Erhalten (302) von Kontextinformationen des Umfelds (150) das Erkennen von Kontextinformationen aus Audio und/oder Bewegung, die in dem Umfeld (150) aufgenommen werden, umfasst.

4. Verfahren (300) nach einem der vorstehenden Ansprüche, wobei das Erhalten (302) von Kontextinformationen des Umfelds (150) das Erkennen von Kontextinformationen aus Umgebungslicht und/oder Umgebungstemperatur, die in dem Umfeld (150) erfasst werden, umfasst.

5. Verfahren (300) nach einem der vorstehenden Ansprüche, ferner umfassend ein Darstellen (316) des geänderten Quellbilds (210) auf einer Anzeige (106).

6. Verfahren (300) nach einem der vorstehenden Ansprüche, wobei das Steuern (314) der Vielzahl von Lichtquellen (140, 142) das Steuern einer ersten Lichtquelle (140) basierend auf einer ersten Farbe des Satzes von Farben und das Steuern einer zweiten Lichtquelle (142) basierend auf einer zweiten Farbe des Satzes von Farben umfasst.

7. Verfahren (300) nach Anspruch 6, ferner umfassend ein Sortieren (308) des Satzes von Farben gemäß einer vordefinierten Farbskala, und wobei das Steuern (314) der Vielzahl von Lichtquellen (140, 142) zuerst das Steuern der Vielzahl von Lichtquellen (140, 142) basierend auf der ersten Farbe des sortierten Satzes von Farben und anschließend das Steuern der Vielzahl von Lichtquellen (140, 142) basierend auf der zweiten Farbe des sortierten Satzes von Farben umfasst.

8. Verfahren (300) nach einem der vorstehenden Ansprüche, wobei das Erhalten (302) von Kontextinformationen des Umfelds (150) ein Bestimmen einer Art des Umfelds (150) basierend auf den Kontextinformationen und das Ändern (304) des Quellbilds (200) basierend auf der bestimmten Art des Umfelds (150) in das geänderte Quellbild (210) umfasst.

9. Verfahren (300) nach einem der vorstehenden Ansprüche, wobei es sich bei den Kontextinformationen um einen Satz von Farben, die in dem Umfeld (150) vorhanden sind, handelt.

10. Verfahren (300) nach einem der vorstehenden Ansprüche, wobei das Ändern (304) des Quellbilds (200) in ein geändertes Quellbild (210) ebenso auf einer Tageszeit basiert.

11. Verfahren (300) nach einem der vorstehenden Ansprüche, wobei das Ändern (304) des Quellbilds (200) in ein geändertes Quellbild (210) ein Anwenden eines oder mehrerer Filter auf das Quellbild (200) umfasst.

12. Verfahren (300) nach einem der vorstehenden Ansprüche, ferner umfassend:
Speichern (310) des extrahierten (306) Satzes von Farben in einem Speicher (108), und
Abrufen (312) des gespeicherten (310) Satzes von Farben.

13. Beleuchtungssteuerungssystem (100) zum Steuern einer Vielzahl von Lichtquellen (140, 142) basierend auf einem Quellbild (200), wobei die Vielzahl von Lichtquellen (140, 142) in einem Umfeld (150) installiert sind, das Beleuchtungssteuerungssystem (100) umfassend:
einen Prozessor (104), der konfiguriert ist, um Kontextinformationen des Umfelds (150) zu erhalten, um das Quellbild (200) basierend auf Kontextinformationen in ein geändertes Quellbild (210) zu ändern, und
**dadurch gekennzeichnet, dass** der Prozessor konfiguriert ist, um einen Satz von Farben, die in dem geänderten Quellbild (210) vorhanden sind, zu extrahieren,
wobei der Prozessor (104) ferner konfiguriert ist, um die Vielzahl von Lichtquellen (140, 142) basierend auf dem Satz von Farben, die in dem geänderten Quellbild (210) vorhanden sind, zu steuern.

14. Computerprogrammprodukt für das Beleuchtungssteuerungssystem (100) nach Anspruch 13, das Computerprogrammprodukt umfassend Computerprogrammcode, um das Verfahren (300) nach einem der Ansprüche 1 bis 12 durchzuführen, wenn das Computerprogrammprodukt auf dem Prozessor (104) des Beleuchtungssteuerungssystem (100) ausgeführt wird.

## Revendications

1. Procédé (300) de commande d'une pluralité de sources de lumière (140, 142) sur la base d'une image source (200), dans lequel la pluralité de sources de lumière (140, 142) sont installées dans un environnement (150), le procédé (300) comprenant :
l'obtention (302) d'informations contextuelles de l'environnement (150),
la modification (304) de l'image source (200) sur la base des informations contextuelles en une image source modifiée (210), **caractérisé en ce que**
l'extraction (306) d'un ensemble de couleurs présentes dans l'image source modifiée (210), et
la commande (314) de la pluralité de sources de lumière (140, 142) sur la base de l'ensemble de couleurs de l'image source modifiée (210).

2. Procédé (300) selon la revendication 1, dans lequel l'obtention (302) d'informations contextuelles de l'environnement (150) comprend la détection d'informations contextuelles à partir d'une image de l'environnement (150).

3. Procédé (300) selon la revendication 1 ou 2, dans lequel l'obtention (302) d'informations contextuelles de l'environnement (150) comprend la détection d'informations contextuelles à partir d'un audio et/ou d'un mouvement capturés dans l'environnement (150).

4. Procédé (300) selon l'une quelconque des revendications précédentes, dans lequel l'obtention (302) d'informations contextuelles de l'environnement (150) comprend la détection d'informations contextuelles à partir de lumière ambiante et/ou température ambiante détectées dans l'environnement (150).

5. Procédé (300) selon l'une quelconque des revendications précédentes, comprenant en outre le rendu (316) de l'image source modifiée (210) sur un écran (106).

6. Procédé (300) selon l'une quelconque des revendications précédentes, dans lequel la commande (314) de la pluralité de sources de lumière (140, 142) comprend la commande d'une première source de lumière (140) sur la base d'une première couleur de l'ensemble de couleurs et la commande d'une seconde source de lumière (142) sur la base d'une seconde couleur de l'ensemble de couleurs.

7. Procédé (300) selon la revendication 6, comprenant en outre le tri (308) de l'ensemble de couleurs selon une échelle de couleurs prédéfinie, et dans lequel la commande (314) de la pluralité de sources de lumière (140, 142) comprend d'abord la commande de la pluralité de sources de lumière (140, 142) sur la base de la première couleur de l'ensemble de couleurs trié, puis la commande de la pluralité de sources de lumière (140, 142) sur la base de la seconde couleur de l'ensemble de couleurs trié.

8. Procédé (300) selon l'une quelconque des revendications précédentes, dans lequel l'obtention (302) d'informations contextuelles de l'environnement (150) comprend la détermination d'un type de l'environnement (150) sur la base des informations contextuelles et la modification (304) de l'image source (200) est basée sur le type déterminé de l'environnement (150) dans l'image source modifiée (210).

9. Procédé (300) selon l'une quelconque des revendications précédentes, dans lequel les informations contextuelles sont un ensemble de couleurs présentes dans l'environnement (150).

10. Procédé (300) selon l'une quelconque des revendications précédentes, dans lequel la modification (304) de l'image source (200) en une image source modifiée (210) est également basée sur une heure de la journée.

11. Procédé (300) selon l'une quelconque des revendications précédentes, dans lequel la modification (304) de l'image source (200) en une image source modifiée (210) comprend l'application d'un ou de plusieurs filtres à l'image source (200).

12. Procédé (300) selon l'une quelconque des revendications précédentes, comprenant en outre :
le stockage (310) de l'ensemble de couleurs extrait (306) dans une mémoire (108), et
le rappel (312) de l'ensemble de couleurs stocké (310).

13. Système de commande d'éclairage (100) permettant de commander une pluralité de sources de lumière (140, 142) sur la base d'une image source (200), dans lequel la pluralité de sources de lumière (140, 142) sont installées dans un environnement (150), le système de commande d'éclairage (100) comprenant :
un processeur (104) configuré pour obtenir des informations contextuelles de l'environnement (150), pour modifier l'image source (200) sur la base d'informations contextuelles dans une image source modifiée (210), et **caractérisé en ce que** le processeur est configuré pour extraire un ensemble de couleurs présentes dans l'image source modifiée (210),
dans lequel le processeur (104) est en outre configuré pour commander la pluralité de sources de lumière (140, 142) sur la base de l'ensemble de couleurs présentes dans l'image source modifiée (210).

14. Produit programme d'ordinateur pour le système de commande d'éclairage (100) selon la revendication 13, le produit programme d'ordinateur comprenant un code de programme informatique pour réaliser le procédé (300) selon l'une quelconque des revendications 1 à 12 lorsque le produit programme d'ordinateur est exécuté sur le processeur (104) du système de commande d'éclairage (100).
